# EUROPEAN PATENT APPLICATION

(11) **EP 1 985 881 A2**
(43) Date of publication of application: **29.10.2008**
(21) Application number: 08075287.6
(22) Date of filing: 09.04.2008
(51) Int. Cl.: F16D 27/112

(54) **Apparatus which can be engaged by resilient means and disengaged electromagnetically for transmission of a rotational movement to a driven shaft**

(30) Priority: 26.04.2007 IT MI20070862
(71) Applicant: Baruffaldi S.p.A., 20067 Tribiano MI (IT)
(72) Inventor: Boffelli Piercarlo c/o Baruffaldi S.p.A., 20067 Tribiano (IT); Bellotti Claudio c/o Baruffaldi S.p.A., 20067 Tribiano (IT); Depoli Erminio c/o Baruffaldi S.p.A., 20067 Tribiano (IT); Natale Fabio c/o Baruffaldi S.p.A., 20067 Tribiano (IT)
(74) Representative: Raimondi, Margherita

(57) **Abstract**

Apparatus for transmitting movement to a driven part (510;510,1) idle on a bearing (2d), comprising a shaft (2) on which the driven part (510;510,1) is mounted; movement generating means (11) connected to the shaft (2), an electromagnetic clutch (400) which comprises a rotor (410) axially fixed to and rotationally integral with the shaft (2), a fixed electromagnet (422), and an armature (432) situated axially opposite the electromagnet (422) on the opposite side to the rotor (410), in which said armature (432) has a set of radial inner teeth (432a) able to engage with a corresponding set of teeth (4a) of a bush (4) integral with the shaft (2) together with which it rotates, between the armature (432) and the rotor (410) there being axially arranged resilient means (433) able to keep the armature (432) pushed towards the driven part (510;510,1) and therefore engaged with the teeth (4a) of the bush (4), the armature (432) carries a member (515) able to engage with the driven part (510;510,1), energization/de-energization of the electromagnet (422) causing an idle/rotating condition of the driven part (510;510,1).

## Description

The present invention relates to an apparatus for transmitting movement from a driving shaft to a driven part.

It is known, for example in the technical sector relating to the cooling of cooling fluids contained in the radiators of motor vehicles, that there exists the need to force air onto the said radiator in order to obtain more rapid dissipation of heat from the liquid to the exterior, said forced air flow being obtained by causing the rotation of a fan normally mounted on a shaft which is driven by a belt operated by the driving shaft.

It is also known that said fan must be made to rotate only when a certain predefined temperature of the cooling fluids is reached, said temperature being sensed by means of a thermostat which actuates an electromagnetic clutch, closing of which starts rotation of the fan.

In greater detail, it is required that a motor vehicle fan should be able to rotate:
- at a speed the same as or greater than that of the transmission shaft when there are higher external temperatures or during use in critical conditions which result in overheating of the engine;
- at a speed less than that of the transmission shaft when reduced ventilation is required, for example in order to cool only the radiator of the air-conditioning system;
- at zero speed, namely with the fan which does not rotate at all and remains in an idle condition with respect to the driving shaft, in the case of particularly low temperatures where further cooling serves no purpose or may even be damaging.

In an attempt to achieve such performance features coupling systems of the mixed type with electromagnetically controlled friction clutches and drive joints based on the use of parasitic currents generated by the rotation of a driving part in the vicinity of permanent magnets have been developed.

These devices, however, have large axial dimensions and are complicated and costly to implement and in some solutions do not envisage the possibility of being able to maintain an albeit slow rotation of the fan (fail safe mode) in the event of interruption and/or total failure of the power supply of the control circuits for the various actuating components.

The technical problem which is posed, therefore, is to provide an apparatus for transmitting the rotational movement to a driven part, ensuring safe rotation thereof in the event of malfunctioning of the associated control devices.

In connection with this problem it is also required that the apparatus should be suitable for forming part of the system for transmitting the movement to a fan for vehicles, having compact dimensions, in particular in the axial direction, and formed by a small number of costly parts and being able to be easily mounted inside the engine compartment.

These technical problems are solved according to the present invention by an apparatus for transmitting the movement according to the characteristic features of Claim 1.

Further details may be obtained from the following description of a non-limiting example of embodiment of the invention, provided with reference to the accompanying drawings in which:
- Figure 1:: shows a schematic axially cross-sectioned view of a first embodiment of the apparatus for transmitting the movement according to the present intention; and
- Figure 2:: shows a cross-section similar to that of Fig. 1 of a second embodiment of the apparatus applied to a cooling fan for vehicles.

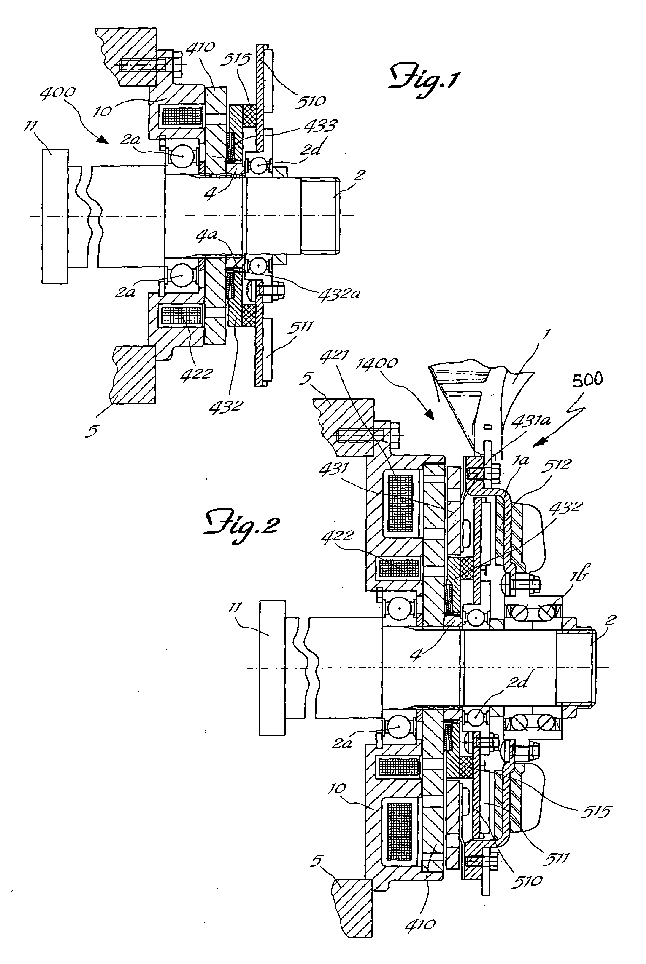

As shown in Fig. 1, in the apparatus according to the present invention for transmitting a rotational movement, a driving part, shown by way of example as a disk 510, idle on a bearing 2d, is mounted on a shaft 2 supported on bearings 2a of a support housing 10 fixed to a stationary base 5. The shaft 2 is rotationally driven by means of a driving part 11 conventional per se and not described in detail.

More particularly, the apparatus for transmitting the movement to the disk 510 comprises essentially:
- an electromagnetic clutch 400, engagement/disengagement of which allows the disk 510 to be kept in the idle condition or be rotated;
- a parasitic-current or Foucault coupling 500 which is connected to the armature of the clutch 400 and is able to transmit to the disk a rotational movement at a speed less than that of the shaft 2.

In greater detail, said electromagnetic clutch 400 comprises:
a rotor 410 axially fixed and rotationally integral with the shaft 2;
an electromagnetic 422 fixed to the housing 10 joined to the base 5;
a corresponding armature 432 situated opposite the electromagnet 422;
said armature 432 carries a friction ring 515 situated axially opposite the disk 510;

- the armature 432 has a set of radial inner teeth 432a able to engage with a corresponding set of teeth 4a of a bush 4 integral with the shaft 2 together with which it rotates; a Belleville washer 433, able to keep the armature 432 pushed towards the fan 1 and therefore engaged with the teeth of the bush 4, is also axially arranged between the armature 432 and the rotor 410.

With this configuration it is possible to obtain the two different speeds of rotation of the disk 510, i.e.:

### SPEED I

- the clutch 400 is operated by de-energizing the electromagnet 422 so that the action of the Belleville washers 433 pushes the armature 432 and therefore the friction ring 515 against the disk 510;
- in these conditions the disk 510 rotates at the same speed as the shaft 2 by means of the teeth 432a/4a of the armature 432/bush 4;

### IDLE

by energizing the electromagnet 422, the armature 432 is recalled against the thrusting force of the Belleville washers 433, causing separation of the friction ring 515 from the disk 510 which no longer receives the movement, remaining idle on the bearing 2d.

As shown in Fig. 2, the transmission apparatus may be incorporated in a drive for a cooling fan 1 of a vehicle schematically shown with the base of the engine 5; the fan 1 is fastened to a bell member 1a mounted on a bearing 1b keyed onto the free end of the shaft 2 mounted on a bearing 2a of a support housing 10 fixed to the base 5; the shaft 2 is rotationally operated by the driving shaft of the vehicle by means of a connection 11 conventional per se and not described in detail.

The apparatus for transmitting the movement to the fan 1 comprises essentially in this case:
- an electromagnetic clutch 1400 with a double armature 431,432, engagement/disengagement of which causes transmission of the rotational movement to the fan 1 or an idle condition thereof with respect to the shaft 2;
- a parasitic-current or Foucault coupling 500 connected to one of the two armatures of the clutch 1400 and able to transmit to the fan a rotation at a slower speed.

In greater detail, said electromagnetic clutch 1400 comprises:
a rotor 410 axially fixed to and rotationally integral with the shaft 2;
a pair of electromagnets 421 and 422 of varying power concentric with each other and fixed to the housing 10 joined to the body 5 of the engine;
a corresponding pair of armatures 431 and 432 concentric with each other and situated opposite the respective electromagnetic 421, 422;

The radially outermost armature 431 is joined to one end of a respective resilient member 431a, the other end of which is joined to the fan 1 and able to allow axial displacement of the armature, but not relative rotation with respect to the fan;
as in the case of Fig. 1, the radially innermost armature 432 is connected by means of a friction ring 515 to a disk 510 idle on a bearing 2d and carrying a plurality of permanent magnets 511 situated opposite a ring of conductive material 512 integral with the bell member 1a which carries the fan 1;
- the radially innermost armature 432 has a set of radial inner teeth 432a able to engage with corresponding teeth 4a of a bush 4 integral with the shaft 2 together with which it rotates; a Belleville washer 433, able to keep the armature 432 pushed towards the fan 1 and therefore engaged with the teeth of the bush 4, is also axially arranged between the armature 432 and the rotor 410.

With this configuration it is possible to obtain the different and required speeds of rotation of the fan 1, i.e.:

### SPEED I

- by energizing the radially outermost electromagnet 421, the outermost armature 431 is recalled, engaging the fan 1 with the rotor 410 which causes rotation of the fan 1 at the same speed as that of the driven shaft 2.

### SLOW SPEED

Should a slower cooling speed be required, as, for example, in the case of cooling of only the radiator of the air-conditioning unit:
- the clutch 1400 is operated by de-energizing both the outermost electromagnet 421 and the innermost electromagnet 422, so as to keep the innermost armature 432 and the friction ring 515 pushed against the disk 510 by the action of the Belleville washers 433;
- in these conditions the fan 1 is operated by the Foucault coupling (500) which, owing to the relative slipping of the driving disk 510 and contact disk 512, causes a reduction in the speed of rotation of the fan with respect to the speed of the shaft 2.

### IDLE

Should no rotation of the fan 1 be required, it is also possible to obtain an idle condition thereof:
- by deactivating the outermost electromagnet 421 in order to separate the outermost armature 431 and activating the innermost electromagnet 422 so as to recall the innermost armature 432, separating the friction ring 511 from the disk 510 and causing opening of the Foucault coupling which is no longer able to transmit the rotational power to the fan 1 which remains idle.

### FAIL SAFE MODE

By means of the Foucault coupling 500 it is also possible to obtain safety operation, i.e. so-called "fail-safe mode", so as to ensure rotation of the fan also in the event of malfunctioning of the control system.

For this purpose, assuming a malfunction affecting both the system for controlling engagement and the electric power supply to the electromagnets 421,422, the thrust by the washers 433 on the innermost armature 432 causes, via the friction ring 515, engagement of the disk 510 of the Foucault coupling which transmits in any case a slower speed to the fan 1.

It is therefore clear how with the apparatus according to the invention it is possible to obtain rotational operation of a driven disk at different speeds, at least one of which during operation is fail-safe mode.

## Claims

1. Apparatus for transmitting movement to a driven part (510;510,1) idle on a bearing (2d), comprising:
- a shaft (2) on which the driven part (510;510,1) is mounted;
- movement generating means (11) connected to the shaft (2);
- an electromagnetic clutch (400;1400) which comprises a rotor (410) axially fixed to and rotationally integral with the shaft (2), a fixed electromagnet (422), and an armature (432) movable axially and situated opposite the electromagnet (422) on the opposite side to the rotor (410);
**characterized in that**:
said armature (432) has a set of radial inner teeth (432a) able to engage with a corresponding set of teeth (4a) of a bush (4) integral with the shaft (2) together with which it rotates,
between the armature (432) and the rotor (410) there being axially arranged resilient means (433) able to keep the armature (432) pushed towards the driven part (510;510,1) and therefore engaged with the teeth (4a) of the bush (4),
the armature (432) carries a member (515) able to engage with the driven part (510;510,1),
energization/de-energization of the electromagnet (422) causing an idle/rotating condition of the driven part (510;510,1) following recall/release of the armature (432).

2. Apparatus according to Claim 1, **characterized in that** said driven shaft (2) is supported by the housing (10) of the apparatus by means of bearings (2a).

3. Apparatus according to Claim 1, **characterized in that** said resilient means (433) for exerting a thrust on the armature (432) are formed by at least one Belleville washer.

4. Apparatus according to Claim 1, **characterized in that** the member (515) of the armature (432) able to engage with the driven part (510;510,1) is a friction ring.

5. Apparatus according to Claim 1, **characterized in that** the driven part comprises a disk (510) forming the driving part of a Foucault coupling (500) arranged between the apparatus and a part (1) to be rotated.

6. Apparatus according to Claim 5, **characterized in that** said parasitic-current or Foucault coupling (500) is connected to the armature (432) of the clutch (400;1400) and is able not to transmit or to transmit to the part (1) to be operated a speed of rotation slower than that of the shaft (2) depending on engagement / disengagement of the clutch (400;1400).

7. Apparatus according to Claim 5, **characterized in that** said disk (510) has a plurality of permanent magnets (511) situated opposite a ring of conductive material (512) integral with the part (1) to be rotated by means of the Foucault coupling.

8. Apparatus according to Claim 6, **characterized in that** the electromagnetic clutch (1400) comprises:
a rotor (410) axially fixed to and rotationally integral with the shaft (2);
a pair of electromagnets (421,422) of varying power concentric with each other and fixed;
a corresponding pair of armatures (431,432) concentric with each other and situated opposite the respective electromagnet (421,422).

9. Apparatus according to Claim 8, **characterized in that** the radially outermost armature (431) is joined to one end of a respective resilient member (431a), the other end of which is joined to the part (1) to be rotated.

10. Apparatus according to Claim 9, **characterized in that** said resilient member (431a) is able to allow an axial displacement of the armature, but not the relative rotation with respect to the part (1) to be rotated.

11. Apparatus according to Claim 7, **characterized in that** the part to be rotated is the fan (1) of a vehicle.

12. Apparatus according to Claim 11, **characterized in that** said fan (1) is fastened to a bell member (1a) mounted on a bearing (1b) keyed onto the free end of the shaft (2).
